# EUROPEAN PATENT SPECIFICATION

(11) **EP 0 296 862 B1**
(45) Date of publication and mention of the grant of the patent: **10.05.1995**
(21) Application number: 88305748.1
(22) Date of filing: 22.06.1988
(51) Int. Cl.: G06F 15/16

(54) **Multiprocessor information exchange**
Nachrichtenaustausch zwischen Prozessoren
Transfert d'informations entre processeurs

(30) Priority: 24.06.1987 US 66676
(43) Date of publication of application: 28.12.1988
(73) Proprietor: WESTINGHOUSE ELECTRIC CORPORATION, Pittsburgh Pennsylvania 15222 (US)
(72) Inventor: Crew, Albert William, Pittsburgh, PA 15201 (US); Ghrist, William Dempsey, III, Pittsburgh, PA (US); Roslund, Charles Joseph, Pittsburgh, PA 15235 (US); Santoline, Linda Lee, Library, PA 15129 (US); Remley, Gilbert William, O'Hara Township, PA 15238 (US)
(74) Representative: van Berlyn, Ronald Gilbert

(56) References cited:
- EP-A- 0 094 177
- EP-A- 0 187 518
- US-A- 4 345 325
- US-A- 4 509 115

## Description

### Field of the Invention

This invention is directed generally to exchanging information between asynchronously operated digital processors using dual port shared memory. More particularly, it is directed to passing updated images of messages between processors operating on deterministic cycle times where the latest message is the most important.

### Background Information

From EP-A-0 094 177 it is known that in hightly coupled networks there is generally one memory which is shared by different processors. These different processors use the memory as mailbox through which information is exchanged by messages.

In distributed microprocessor-based systems, the exchange of information between processors is a fundamental communications function. In a typical distributed system, microprocessor boards are arranged in a "host"/"slave" type hierarchy, with one or more redundant "host" processors communicating with one or more of several different types of "slave" processors. The use of this architecture allows the slave processors to perform many standard system tasks, such as datalink or data highway communications, analog input processing, et cetera, while off-loading the host processor(s), which in turn coordinates the control of a system level application function.

With this arrangement, communication between the host and slave processors is of prime importance in order to optimize system throughput. One method by which the communications between the processors can be accomplished is through the use of a dual-port memory on each slave processor board which can be accessed by the host processors via the system bus. The dual-port memory can be segmented into unidirectional buffer areas which are used to provide a continuously updated image of certain variables. Each buffer is either updated by the host processor and the flow of information passes from host-to-slave; or alternatively, each buffer is updated by the slave processor and the flow of information passes from slave-to-host. By defining the flow of information through shared memory as the simplex communication of constantly updated images, the communications requirements are simplified in that lost message detection and lost message recovery are not necessary. In other words, only the latest message image is important.

For each message which must be passed through shared memory, certain buffer areas in dual-port memory on the slave processor must be accessed by both the slave and host processors. This leads to the possibility of data tearing, which may occur whenever more than one user is permitted to simultaneously access a given memory resource. Data tearing occurs when one processor writes to a memory area while it is being read by another processor. If this situation exists, it is possible that the processor reading the memory actually reads the "torn" pieces of two separate data values.

In order to prevent such data tearing phenomena from occurring, each memory area should be locked by the processor requiring buffer access. Typically, the memory lock is implemented in software via a semaphore. Whenever the semaphore is in the locked state, all other processors are denied access to the memory area controlled by the semaphore. The processor which has locked the semaphore is the only processor which can subsequently unlock it. The use of software semaphores eliminates the possibility of data tearing, but introduces the possibility of memory resource contention between the host and slave processors.

Because both the slave and the host processors are required to access the buffer areas in dual-port memory, it is necessary to ensure that these processors do not contend for a particular data buffer, as this would slow down the operation of the individual processors. Buffer contention can occur when only single or dual shared memory buffers are allocated for a particular piece of data. Buffer contention occurs when one processor is denied access to a buffer because that buffer is currently locked by another user. The processor which desires buffer access must wait for the other user to release the locked buffer.

For the single shared memory buffer allocation case, buffer contention problems are readily apparent. When messages are passed from "slave-to-host", the host processor must wait for the slave processor to update the data in the buffer and then release the buffer such that the host can access the newest data. While the host processor is accessing the data, the slave has no free area for updating the next message. For messages passed from "host-to-slave", the situation is identically reversed. Each processor must wait for the buffer to be in the correct state (either "idle" or "newest") before it may access the buffer. There is no guarantee that the buffer will be available at any given time.

When dual shared memory buffers are allocated for a single data entity, the method by which the dual buffers are acquired and released by the two processors is identical to that of the single shared memory buffer case, except for the additional buffer. The addition of another shared memory buffer eliminates many of the buffer contention problems of the single buffer case. However, because the host and slave processors run asynchronously, there are no real restrictions on the amount of time either processor can hold a buffer assigned to itself. Thus, buffer contention can occur even when dual buffers are used, as explained in the following scenario: Assume that the slave processor is operating at a slower rate than its corresponding host processor. This implies that the slave processor will take longer to access and release a data buffer than the host processor. When messages are passed from host-to-slave, the host processor will update an "idle" buffer to the "newest" state. The slave processor acquires the newest data by assigning this "newest" buffer to itself. In the meantime, the host processor updates the second buffer with even newer data, and changes the status of this buffer to "newest". Still, the slave processor has not released its original buffer. Again, the host decides it must update the data image. However, because the states of the two buffers are "assigned to slave" and "newest", there is not an "idle" buffer available for the host to acquire. The host cannot gain access to the buffer which is assigned to the slave processor. It is not desirable for the host to reuse the buffer containing the newest data, because when the slave does release its buffer, there will be no "newest" data buffer for it to access. Thus, the host processor must wait until the slave releases its buffer before it can again update the data image. In this case, buffer contention prevents the data image from being updated.

Buffer contention is undesirable because it not only slows down the shared memory communications, it unnecessarily couples the operation of the host and slave processors. Buffer contention is particularly undesirable in real-time control and protection systems for complex processes, such as nuclear power plants, where the processors must be run on deterministic cycle times to assure that required functions are carried out in a timely manner, both for precise control and safe operation.

The present invention provides a method as set out in claim 1 and apparatus as set out in claim 12 for exchanging information between asynchronous digital processors which avoids buffer contention, but permits the processors to operate on deterministic cycle times, and which selectively (i) utilizes buffers in shared memory, (ii) utilizes an efficient allocation of buffers in the shared memory to reduce the number of buffers required for contention free exchange of multiple messages on a single physical communications channel, (iii) permits multiple processors to read a single data entity without any reduction in data update time, and (iv) in which the number of times the same data image is accessible is controllable.

### SUMMARY OF THE INVENTION

The invention in its broad form resides in said above mentioned method and apparatus for transferring information messages in the form of updated images between asynchronous digital processors.

As described herein, a preferred embodiment calls for the provision of three buffers in a dual port shared memory. The buffers are passed between the sender and receiver digital processors without copying data from one buffer to the other, and using a scheme which avoids memory-resource-contention. More particularly, the processor which is sending an updated message image is initially assigned one of the buffers in shared memory. The updated message image to be passed to the receiver processor is entered into this buffer. The sender processor then releases this buffer, marking it as the buffer containing the newest update of the message image. The receiver processor, when it is ready to read the latest update of the message image, assigns to itself the buffer which is marked as containing the newest update of the message image. The updated message image in the buffer assigned to the receiver processor is then copied by the receiver processor and the buffer is released. With this arrangement, buffer contention is eliminated because with triple buffers, 1) a buffer is always available to hold the newest data, 2) a buffer is always available for the sender processor to update the message image, and 3) a buffer is always available for the review processor to access. Only one processor at a time is permitted to assign or release buffers. While a buffer is being filled by the sender processor or buffer contents are being read by the receiver processor, the other processor is free to assign or release buffers.

The restriction on assigning and releasing buffers is imposed by providing in shared memory a buffer status table in which the processors set values of a restricted state variable to indicate buffer status. Access to the buffer status table is controlled by a semaphore lock which when acquired by one processor prevents access to the buffer status table by the other processor.

Advantageously, as described herein, a plurality of asynchronous receiver processors may each receive the updated message images passed by the sender processor. In this embodiment of the invention, only one buffer at a time is assigned to the receiver processors, so that if a second receiver requests an update of the message while another receiver is copying the message, the buffer assigned to the receiver processors is not released until all of the receiver processors have copied the newest updated message image.

Where updated images of multiple messages are to be passed from the sender to the receiver processor, three buffers are assigned to each message in shared memory, in accordance with the broad concept of the invention. For serially transmitted messages, two schemes can be used to reduce the number of buffers required. In accordance with one scheme, buffers numbering two times the number of unique messages plus one are provided in shared memory The buffers assigned to a particular message change as successive serial messages are received. Initially two buffers are assigned to each message and a common buffer serves as the third buffer which receives the next updated message image to be passed. This message image could correspond to any of the unique messages being passed by the sender. The sender processor determines which message is contained in the common buffer from the header of the message. The sender processor then determines which set of two shared memory buffers are associated with this message, and swaps the common buffer containing the updated message image with an idle buffer from the set of two buffers assigned to that message, with the latter buffer becoming the new common buffer. The receiver processor then acquires the buffer in shared memory containing the newest update of the message image, copies the message, and releases the buffer in the same manner as in the basic triple buffer scheme described above.

Since the common buffer is assigned to one of the processors, the role of sender and receiver is reversed when messages are being passed in the opposite direction. Thus, when the common buffer is assigned to the receiver processor, the sender processor operates the same as in the basic triple buffering arrangement, and the receiver processor swaps the buffer in shared memory containing the newest updated message image with the common buffer for reading the passed message. If the sender processor has not provided a later update of the message image, the buffer assigned to the receiver is release as the buffer containing the latest image of that message after the message has been read so that a newest image remains available for the receiver processor. Where multiple channels are provided, such as in a datalink system, and each channel carries n messages, where n is a variable having a separate value for each channel, 2n + 1 buffers are provided in shared memory for each channel.

In the second scheme for reducing the number of shared memory buffers required for transmitting multiple messages, two buffers are assigned to each message in shared memory, and a local buffer in the sender processor is used as the third buffer. In this scheme, the updated message is entered into a local buffer and the sender processor then assigns to itself one of the two buffers in shared memory and copies the data into this buffer. This buffer is then released as the buffer containing the newest updated message image which is read by the receiver processor in the same manner as discussed above in connection with the basic triple buffer scheme. This scheme is used for instance where the sender processor is a controller for a data highway and linked buffers are provided in local memory for off loading messages from the data highway.

### BRIEF DESCRIPTIONS OF DRAWINGS

A better understanding of the invention can be gained from the following description of the preferred embodiments, given by way of example only, when read in conjunction with the accompanying drawings in which:
Figure 1 is a block diagram of a multiprocessor system in accordance with an embodiment of the invention;
Figure 2 is a block diagram of a modified form of the multiprocessor system according to a preferred embodiment of the invention;
Figures 3a through 3j are schematic diagrams illustrating the organization of shared memory and the passage of messages between a single sender and a single receiver processor in accordance with the concepts of pure triple buffering;
Figures 4a through 4f are schematic diagrams illustrating the organization of shared memory and the passage of messages from a single sender processor to multiple host processors using pure triple buffering;
Figures 5a through 5e are schematic diagrams illustrating the organization of shared memory for the passage of a plurality of messages between processors in accordance with another embodiment of the invention using two buffers for each message plus a common third buffer;
Figures 6a through 6e are schematic diagrams illustrating the assignment of the common buffer in local memory of the slave processor in accordance with the embodiment of the invention shown in Figures 5a through 5e, with figures bearing the same letter designation representing the same step of the process;
Figures 7a and 7b are schematic diagrams illustrating the passage of a second message between processors in accordance with the embodiment of the invention illustrated in Figures 5a through 5e;
Figures 8a and 8b are schematic diagrams illustrating the assignment of the common buffer in the local memory of the slave processor for the sequence shown in Figures 7a and 7b;
Figures 9a through 9c are schematic diagrams illustrating the organization of shared memory for the passage of a plurality of messages between processors in accordance with yet another embodiment of the invention using two buffers in shared memory for each message and one of a number of linked buffers in the local memory of the slave processor; and
Figures 10a through 10c are schematic diagrams illustrating the linked buffers in local memory of the slave processor for the sequence of steps illustrated in Figures 9a through 9c.

### DESCRIPTION OF THE PREFERRED EMBODIMENTS

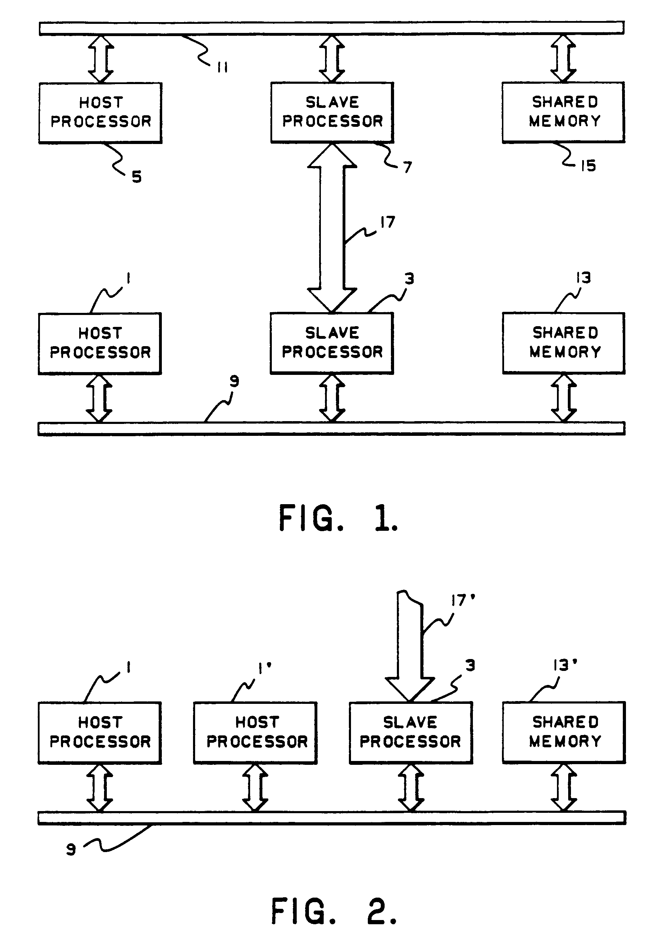

Figure 1 illustrates a multiprocessor system 1 having pairs of digital processors 1 and 3, and 5 and 7 with the processors in each pair connected by a common memory bus 9 and 11 to a shared memory 13 and 15 respectively. The two processors in each pair pass information back and forth through the associated shared memory in accordance with the invention. In the system of Figure 1 the two pairs of processors are connected by a communications link 17 such as a datalink or data highway. In this configuration, the processors 1 and 5 are host processors while processors 3 and 7 are slaves. The host processors perform application functions while the slave processors serve as communication controllers for controlling the flow of information between the host processors over the communications link 17. The communications link 17 transmits messages to slave processors 3 and 7 which place them in the shared memories 13 and 15, typically resident in the respective slave processors, for access by the respective host processors 1 and 5. For outgoing messages the host processors 1 and 5 place messages in the associated shared memory to be transmitted on the communications link by the slave. Such an arrangement is particularly suitable for multiprocessor based control and protection systems for complex process plants such as a nuclear power plant. In such applications the host processors operate on deterministic cycle times; that is, they must perform specified functions within specified intervals for accuracy and safety in process control. They cannot wait for the slave processors. Likewise the slave processors must meet specified time constraints in controlling the communications link, and cannot wait for the hosts. Thus the respective host and slave processors are run asynchronously with the cycle times of the host typically being much longer than that of the slave.

In a system such as that shown in Figure 1, typical messages exchanged by the host processors are repetitively transmitted with each successive repetition representing an updated image of the message. Such messages can represent, for instance, process parameters or status values with the updated image representing the current value of the parameter or status state In such a system, the latest value or latest updated image of the message is the most important. It is not critical to system operation if a message is lost, as long as a reasonably current image of the message is available.

While only two host processors, 1 and 5, and two slave processors, 3 and 7, are shown in Figure 1 for clarity, a typical system would have many processors linked by communication links 17. The typical datalink used as the communication link 17 may be single channel or multiple channel with each channel handing multiple messages. Data highways also typically handle a large number of messages.

In some multiprocessor applications, a single slave processor may serve as a communications controller for multiple host processors. Thus, in Figure 2, the slave processor 3 inserts messages received from a communications link 17′, such as a data highway, in shared memory 13′ for use by two host processors 1 and 1′. The slave processor 3 in the configuration of Figure 2 also transmits on the data highway 17′ messages from both host processors 1 and 1′, As discussed above, a datalink, either single or multiple channel, can be used as the communications link in place of the data highway 17′. In addition, more than two host processors 1 and 1′ can be served by the slave 3 in the arrangement of Figure 2.

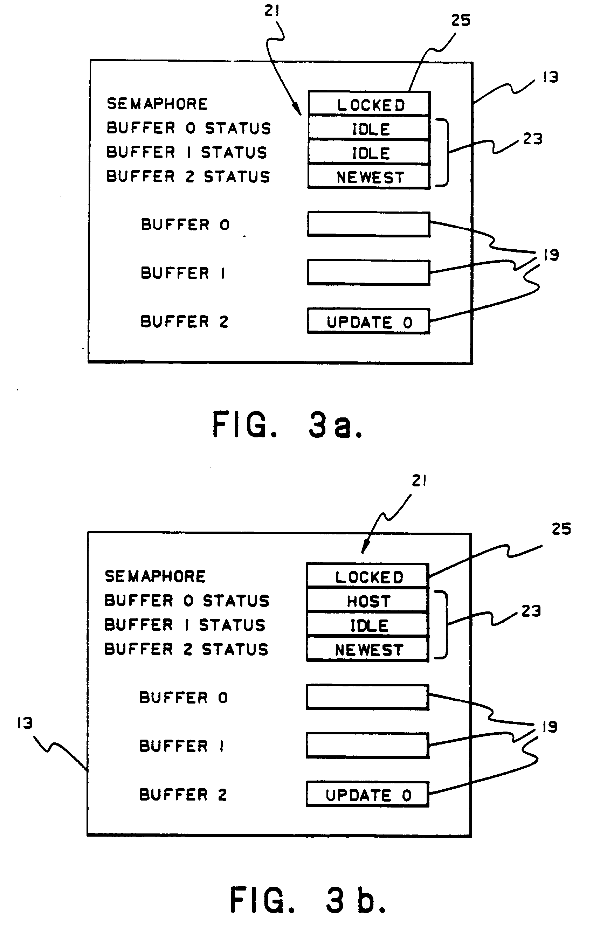

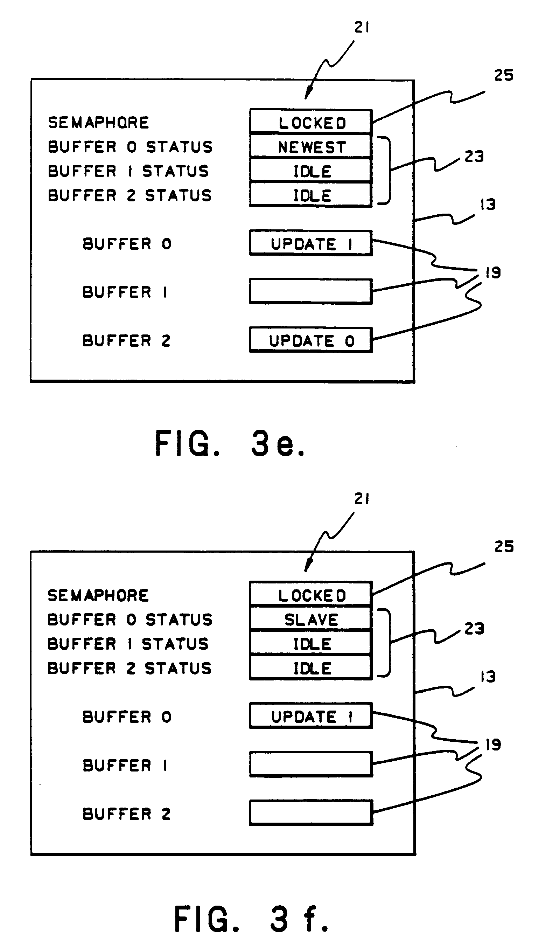

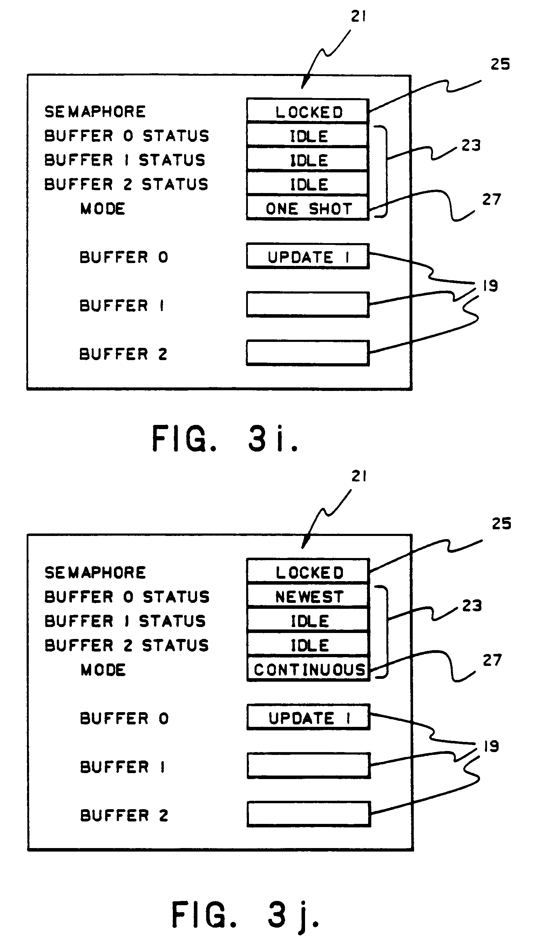

Information is passed between the host 1 and slave 3 processors in accordance with the invention by inserting messages in the shared memory 13. In the basic form of the invention, referred to herein as pure triple buffering, a set of triplicated buffers 19 is maintained in the shared memory 13 for each data entry which must be communicated from the host to slave processor or from the slave to the host processor as shown schematically in Figure 3a. Information about the buffers 19 and access control to the buffers is provided via a Buffer Descriptor Table 21 in shared memory 13. Each set of triplicated buffers 19 has an associated buffer descriptor table 21 containing a three element buffer status array 23 and a semaphore location 25. The buffer status array 23 records the status of each of the three shared buffer memories 19. Each buffer 19 can have one of five buffer statuses: "idle", "assigned to host", "assigned to slave", "newest", and "unused". The semaphore 25 which controls access to the buffer status array 23 is a simple software lock which must be set by any processor 1 or 3 attempting to access the triplicated buffers 19.

The method in which the parameters of the buffer descriptor tables 21 are used varies according to the direction of information flow, and whether the processor desiring buffer access is a host 1 or slave 3 processor. The operation of the buffer descriptor tables 21 in pure triple buffering will be described with the use of the schematic diagrams of Figures 3a-j which show the successive states of the buffer descriptor table 21 entries as a message is passed from one processor to the other through shared memory.

### HOST-TO-SLAVE MESSAGE PASSING

### Host Processor Buffer Acquisition/Release

In host-to-slave message passing, the host processor 1 marks messages for use by the slave processor 3. The host processor 1 uses two separate procedures to access the shared memory data buffers 19: one to acquire an "idle" buffer, and a second to release the "assigned to host" buffer once the new message has been moved into the shared memory buffer 19. The actions which must be taken by the host processor 1 to acquire an "idle" buffer 19 are as follows:
1) The host processor 1 locks the buffer status array 23 by acquiring or locking the buffer descriptor table semaphore 25 as shown in Figure 3a. Once the host processor has the semaphore 25 in a locked state, the slave processor 3 is denied access to the buffer status array 23. In the example of Figure 3a, the last update of the message, update 0, is stored in Buffer 2 which has been assigned the status of "newest".
2) The buffer status array 23 is searched for a status of "idle". If an "idle" buffer is not found, then an error has occurred.
3) The buffer 19 whose status is "idle" is acquired by the host processor 1 by changing the status to "assigned" to host", as illustrated in Figure 3b in which the status of the Buffer 0 is abbreviated to "host".
4) The buffer descriptor table semaphore 25 is released (set to the unlocked state).

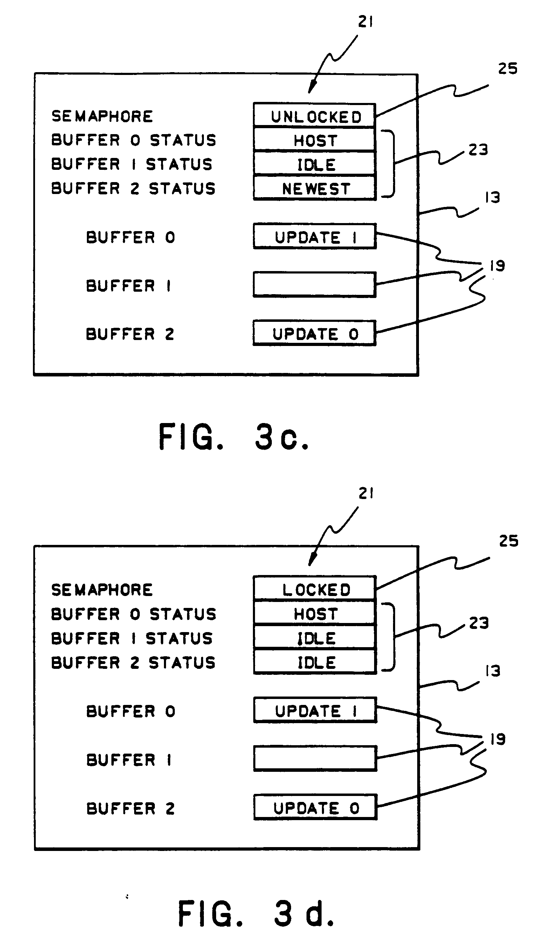

At this point, the host processor 1 moves the "newest" message image, "update 1", from its local memory into the acquired shared memory data buffer 19, Buffer 0, as shown in Figure 3c. Notice that while this is occurring the semaphore 25 for the buffer descriptor table 21 is unlocked so that the slave processor 3, if it has need to, has access to the buffer descriptor table 21. Once data transfer into the "assigned to host" buffer 19 is complete, the host processor 1 must release this buffer, Buffer 0 in the example, so that the slave processor 3 can use the "newest" data. The procedure which the host processor 1 follows to release the buffer 19 is as follows:
1) The host processor 1 locks the buffer status array 23 by acquiring the buffer descriptor table semaphore 25. Once the host processor 1 has the semaphore in a locked state, the slave processor 3 is denied access to the buffer status array 23.
2) The buffer status array 23 is searched for a status of "newest". If a "newest" status is found, then the data which is being provided by the host processor (1) replaces this buffer, Buffer 2 in the example, so the buffer status of "newest" is changed to "idle" as shown in Figure 3d.
3) The buffer status array 23 is searched for a status of "assigned to host". This is the buffer, Buffer 0, which has been filled with the "newest" data. If such a buffer is not found, an error has occurred.
4) The buffer 19 whose status is "assigned to host", Buffer 0, is changed to "newest" as shown in Figure 3e.
5) The buffer descriptor table semaphore 25 is released.

### Slave Processor Buffer Acquisition/Release

The slave processor 3 must access the newest message updates provided by the host processor 1. Two separate procedures are followed: one to acquire the "newest" buffer, and the second to release the "assigned to slave" buffer once the newest data has been used by the slave processor. The actions which must be taken by the slave processor 3 in order to access the "newest" data buffers are as follows:
1) The slave processor 3 locks the buffer status array 23 by acquiring the buffer descriptor table semaphore 25. Once the slave processor has the semaphore in the locked state, the host processor 1 is denied access to the buffer status array.
2) The buffer status array 23 is searched for a buffer 19 with a status of "newest".
3) If a "newest" buffer 19 is found, it is acquired for use by the slave processor by changing its status to "assigned to slave", as is illustrated in Figure 3f in which the status of Buffer 0 is abbreviated to "slave". If a "newest" buffer 19 is not found, then the host processor 1 has not yet provided any message updates in shared memory 13.
4) The buffer descriptor table semaphore 25 is released.

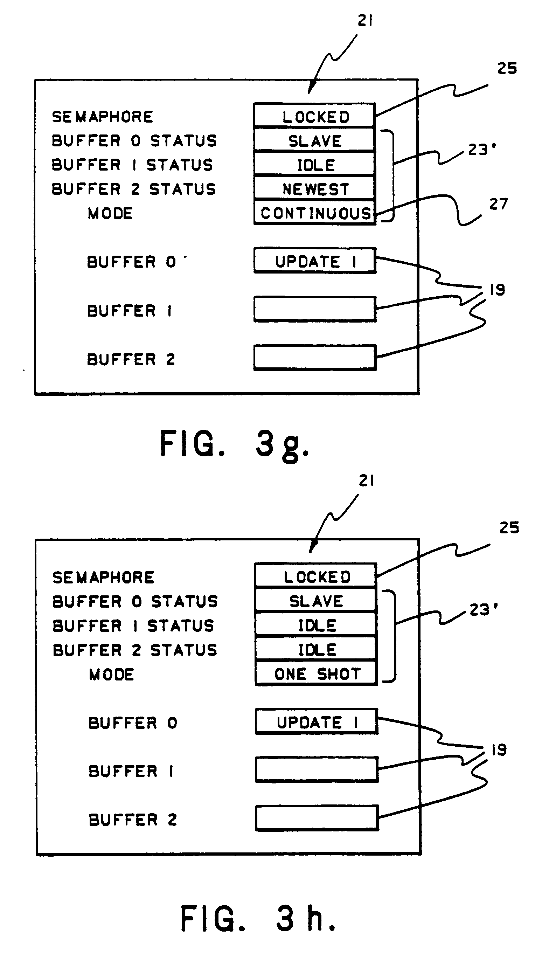

At this point, the slave processor 3 is free to use the data in the buffer 19 assigned to it. While this is occurring, the host processor 1 is free to acquire another buffer 19 to insert a newer update of the message in shared memory 13. When the slave processor 3 no longer requires access to the "assigned to slave buffer", this buffer 19 must be released for reuse by the host processor 1. The procedure which the slave 3 follows to release the buffer is as follows:
1) The slave processor 3 locks the buffer status array 23 by acquiring the buffer descriptor table semaphore 25. Once the slave processor 3 has the semaphore 25 in the locked state, the host processor 1 is denied access to the buffer status array 23.
2) The buffer status array 23 is searched for a buffer 19 with a status of "newest". If such a buffer is found, as indicated by Buffer 2 in the example of Figure 3g, or if a Mode location 27 in the buffer descriptor table 21 indicates that each buffer is to be accessed only once, as indicated in Figure 3h in which the Mode is designated "one shot", then the status of the buffer 19 to be released, Buffer 0 in the sample, is changed to "idle" as shown in Figure 3i. Otherwise, the buffer, 19, which is to be released, Buffer 0 in the examples, still contains the "newest" data, and it is released by changing its status from "assigned to slave" back to "newest" as shown in Figure 3j.
3) The buffer descriptor table semaphore 25 is then released.

The Mode location 27 in the buffer descriptor table 21 is used when it is desired to provide the ability to permit the host to read a message update only once, in which case the Mode is set to "one shot". If it desired that the latest message update be available continuously for the host processor to read, until a newer update is available, the Mode is set to "continuous".

### Slave-To-Host Message Passing

In slave-to-host message passing, the slave processor 3 marks messages for use by the host processor 1. The process used by the slave processor in pure triple buffering is similar to that used by the host processor in sending messages to the slave except that, typically, the slave processor has a buffer 19 assigned to it at initialization to hold the first message image. Then, when the acquire/release buffer procedure is invoked, the slave releases the buffer which is assigned to it by updating its status to "newest", and acquires an "idle" buffer to hold the next update of the message.

The procedure by which a single host processor 1 acquires the message updates passed by the slave processor 3 is the same as that described above for receipt by the slave processor of message updates passed by the host processor.

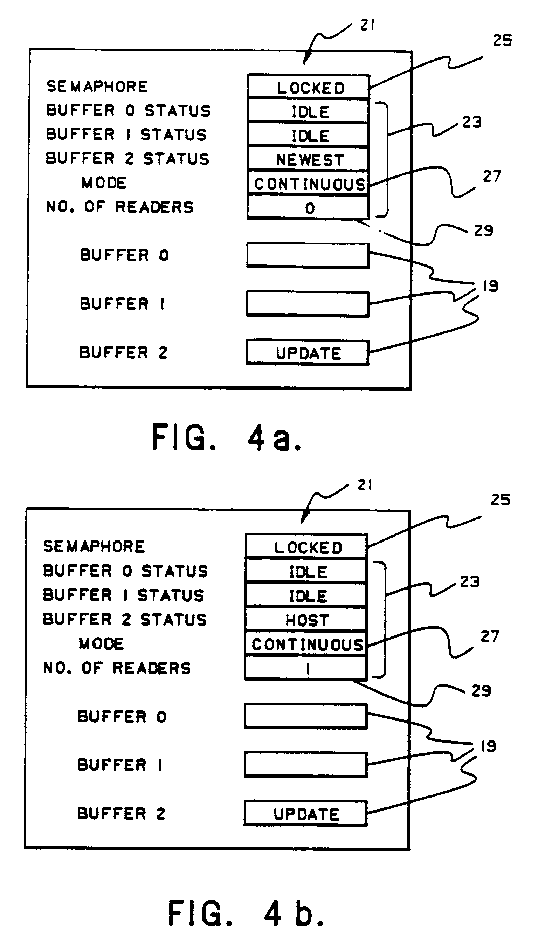

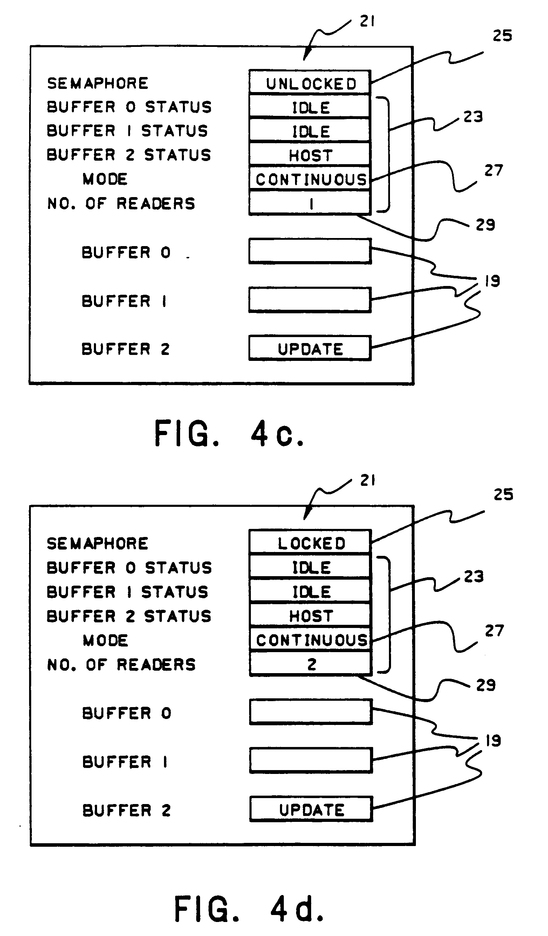

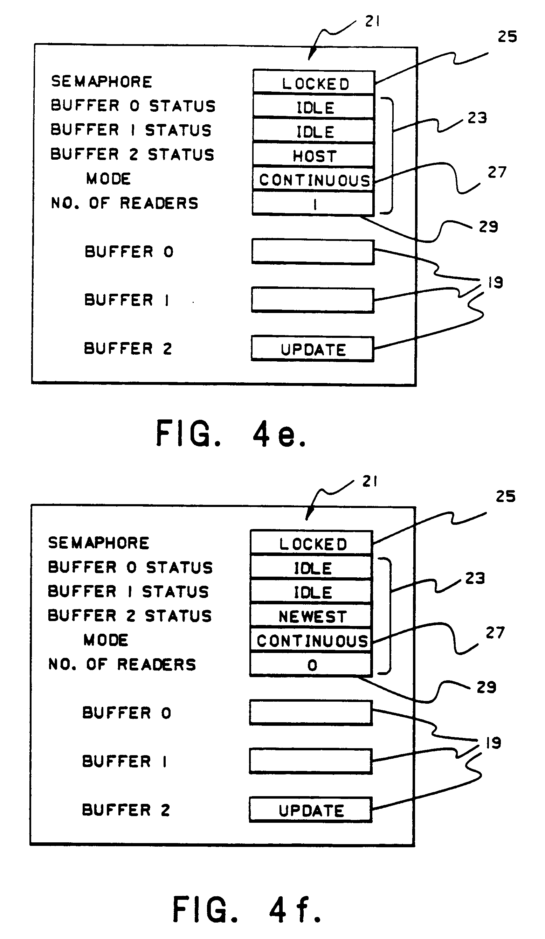

When, as shown in Figure 2, there are multiple processors 1 and 1′ receiving message updates from the same slave processor 3 through a common shared memory 13, the slave processor operates the same as when there is only one host processor However, the multiple host processors 1 and 1′ must share the "newest" message image passed by the slave processor 3. Steps must be taken to preclude release of the buffer 19 with the "newest" message image if another processor is still reading the update. This is accomplished by adding to the buffer descriptor table 21 another index 29 labeled "number of readers" which tracks the number of host processor reading the "newest" message update. Thus, multiple host processors use the following procedure illustrated in Figures 4a through 4f when receiving message updates from a common slave processor:
1) Host processor 1 acquires the semaphore 25 as shown in Figure 4a.
2) A search is made of the buffer array 23 for a buffer 19 with a status of "assigned to host". If such a buffer does not exist, a buffer with a status of "newest", Buffer 2 in the example, is assigned a status of "assigned to host", as shown in Figure 4b. In either case, the number of readers index 29 is incremented by one as indicated in Figure 4b.
3) Host 1 releases the semaphore 25, as indicated in Figure 4c.
4) Host 1′ acquires the semaphore 25.
5) Host 1′ searches for a buffer 19 with a status of "assigned to host". Since such a buffer exists, Buffer 2, it is used simultaneously by both host processors, 1 and 1′, and the number of readers index is incremented to a count of 2 as shown in Figure 4d. If an "assigned to host" buffer did not exist, a "newest" buffer, if one existed, would have been marked as "assigned to host".
6) Host 1′ releases the semaphore 25. Both host 1 and host 1′ copy the updated message image from the buffer with a status "assigned to host", Buffer 2. The procedure which Host 1 and Host 1′ follow to release the buffer is as follows:
7) Host 1 acquires the semaphore 25.
8) Host 1 decrements the number of readers index 29, to a count of 1 in the example as shown in Figure 4e.
9) Since the number of readers index 29 is not equal to zero, indicating that another host processor is also using the "assigned to host" buffer, host 1 releases the semaphore 25.
10) Host 1′ acquires the semaphore 25.
11) Host 1′ decrements the number of readers index 29.
12) Since the number of readers index 29 is now zero, the status of the "assigned to host" buffer, Buffer 2 must be changed. If a "newest" buffer exists, the "assigned to host buffer" is marked as "idle"; otherwise it is marked as "newest" as shown in Figure 4f.
13) Host 1′ releases the semaphore 25.

When multiple host processors are receiving updates of the same message, the mode must be "continuous" so that the "newest" message image is available for other host processors. If the modes selection were configured to "single shot" one host processor could essentially prevent the other host processor from ever accessing data. In addition, a timing constraint must be placed on the amount of time that any of the multiple hosts is allowed to access a buffer. This constraint is necessary so that a buffer which is assigned to multiple host processors is guaranteed to be released by all hosts at least once per host processing cycle. For a system with n host processors, the amount of time any host processor may assign a buffer to itself must be less than 1/nth of the host CPU cycle time.

In the pure triple buffering scheme described above, three buffers are used for each message. Separate buffers are used for messages passing from host to slave and those passing from slave to host. The processor which is passing the message can be considered as the sender processor and the processor to which the message is sent as a receiver processor. Thus it can be seen that messages can be passed in either direction, and the host and slave processors each can be either a sender or a receiver processor.

The basic method of applying triple buffering to shared memory communication of data images between processors can be modified to suit the particular needs of different types of slave processor boards. As previously mentioned, the slave processors are typically designed to off load the functional processors from performing standard system tasks. Two common slave processor functions are simplex-point-to-point (datalink) communications, and data highway communications. Slave processors assigned these functions can benefit from variations in simple shared memory triple buffering: data link controllers due to multiple communication channel considerations, and data highway controllers due to the fact that data is received or transmitted from local memory areas under hardware control.

### MULTIPLE CHANNEL SLAVES

### 2n + 1 Triple Buffering

A slave processor of the datalink controller type generally has greater than one physical communication device on the processor board. Each of the physical communication channels (datalinks) operate as a transmitter, receiver, or bidirectional channel. It is also possible that multiple messages are to be communicated over a single physical channel.

Triple buffering is applicable to datalink controller communications because the slave processor must not wait for a message on any given channel as this prohibits servicing of the remaining channels on the datalink controller. Because datalink activity is serial, only one message at a time among multiple messages can be transmitted or received on any given channel. Thus, triple buffering maybe implemented by providing for each datalink channel a number of buffers equal to two times the number of unique messages communicated over that channel plus 1. The "extra" buffer is for the physical channel itself, i.e., the buffer into which messages are received or from which messages are transmitted. In this arrangement, the shared memory buffers are in a free pool of buffer space, and are not associated with a particular buffer descriptor table except at initialization. At initialization, two shared memory buffers are assigned to each buffer descriptor table, and are initialized to the "idle" state. The third buffer status in each buffer descriptor table is initialized to the "assigned to slave" state, since the third buffer for all buffer descriptor tables associated with a single channel corresponds to the single "extra" buffer which is assigned to the physical channel. In this case, the "assigned to slave" buffer status can be thought of as "assigned to the physical channel". Because the buffers are not rigidly allocated to a particular buffer descriptor table, the size of each of the allocated buffers must be at least as large as the largest message received or transmitted over the given channel. At any given time, two buffers are associated with each particular message, and the third buffer is always assigned to the datalink controller physical communications device. When triple buffering is implemented in this manner, the method of acquiring and releasing buffers from the host side is identical to that previously described. From the datalink controller side, buffer acquisition and release is a "swapping" process.

On datalink controller receive channels, messages are received over the datalink and must be marked for use by the host processor. The messages are received into the shared memory buffer assigned to the physical channel. As in the standard slave-to-host message passing situation, the physical communications device on the datalink controller channel typically has a buffer assigned to it at initialization to hold the first message. Once a new message has been received, the data link controller must determine which buffer descriptor table the message is associated with, and find the correct table. It is to this buffer descriptor table that the "assigned to slave" buffer must be returned and from which an "idle" buffer must be acquired to rearm the physical channel. Once the correct buffer descriptor table is found, the procedure which the datalink controller follows to release its current buffer and acquire an "idle" buffer is identical to standard triple buffering. However, the individual buffers "float" from one descriptor table to another as the serial messages are passed to the host processor.

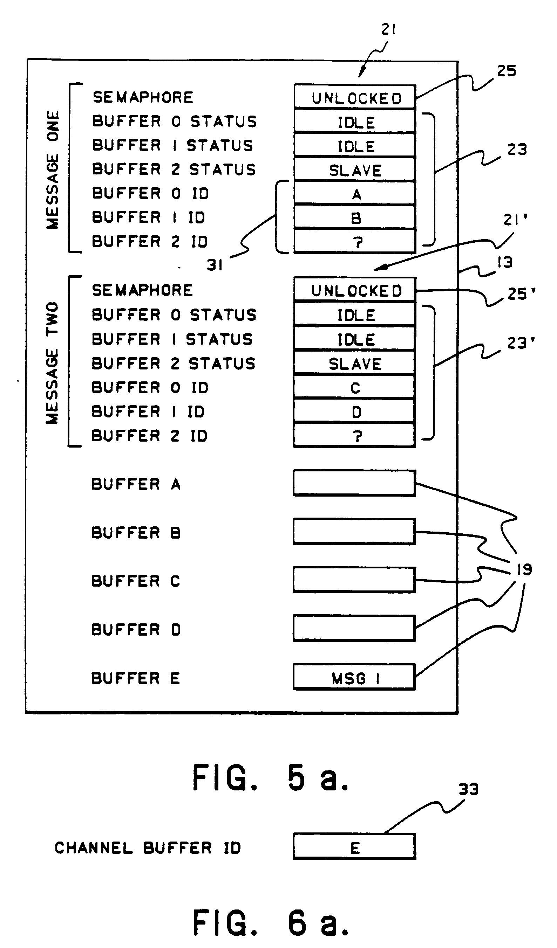

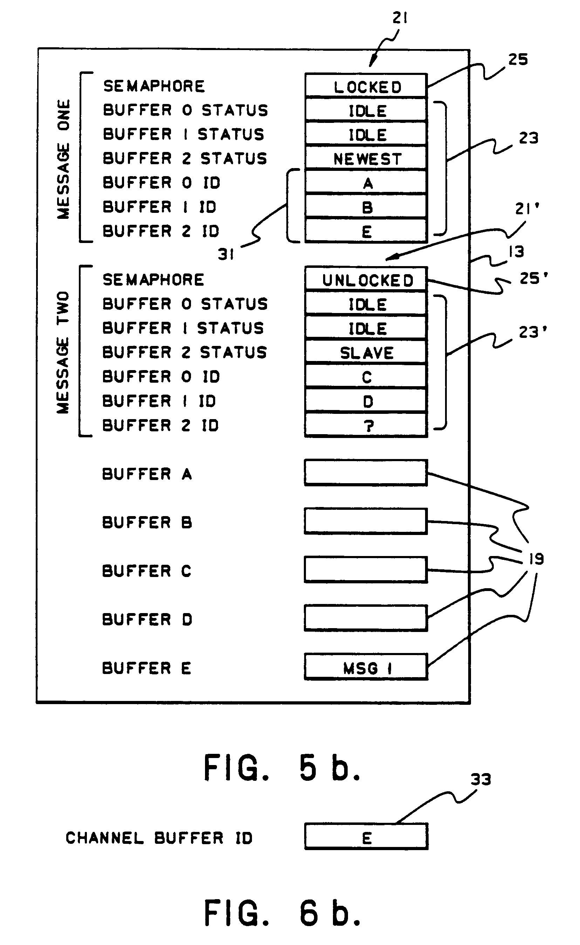

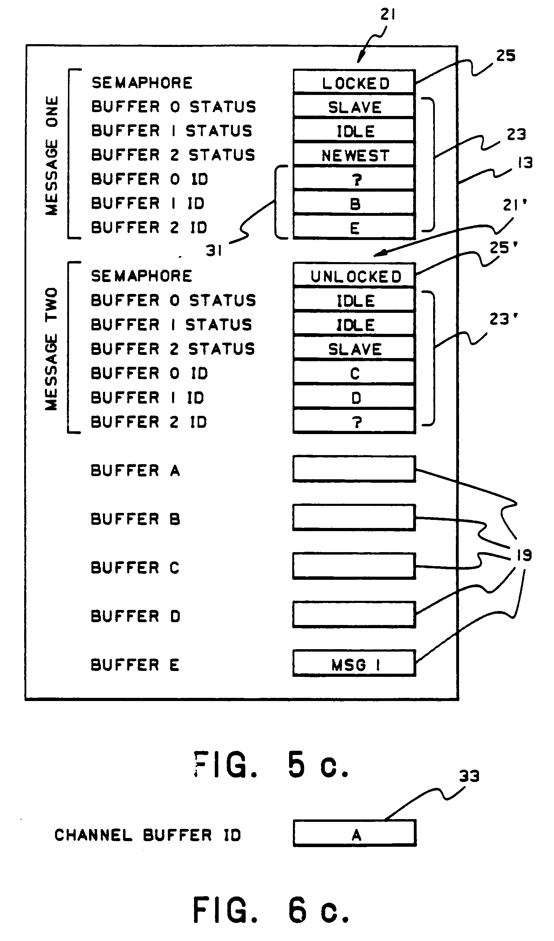

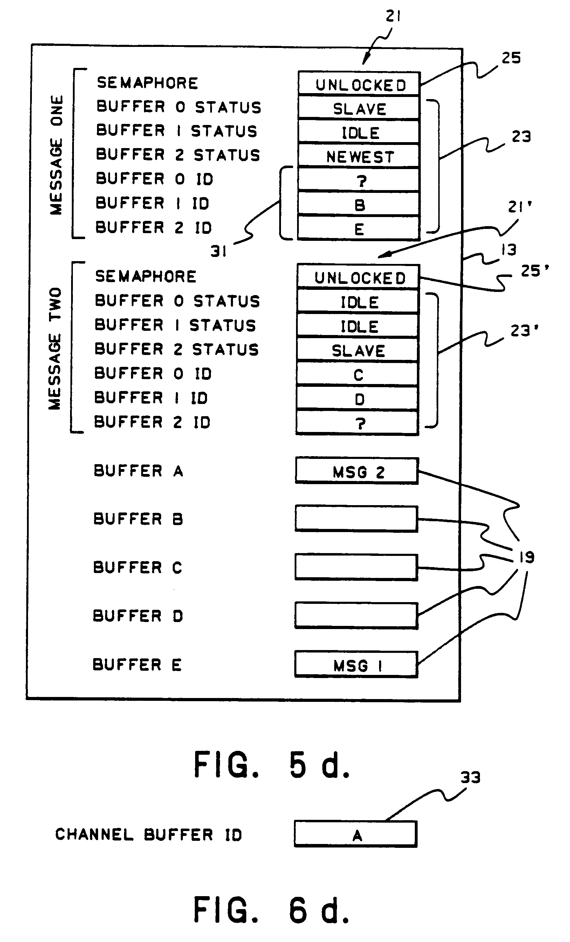

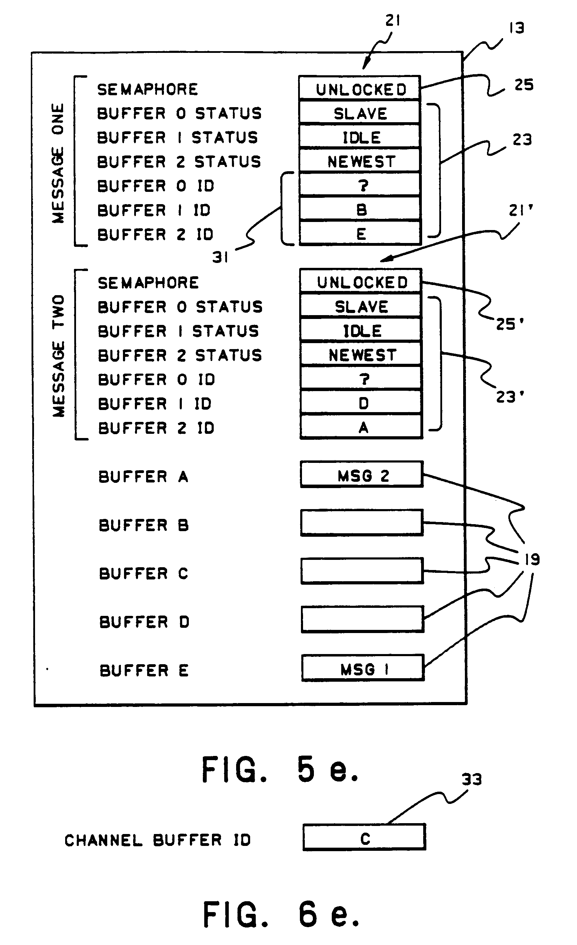

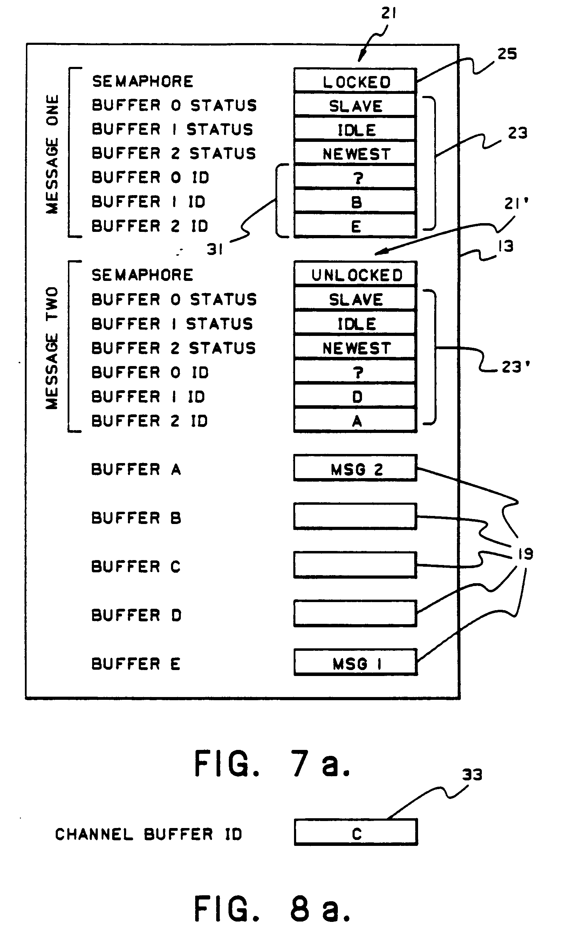

An example of slave-to-host message passing using 2n + 1 buffering is shown in Figures 5 and 6. As can be seen from Figure 5 shared memory 13 contains a buffer descriptor table 21 for each message, and includes in addition to semaphore 25 and buffer status entries, the buffer locations or identifications (IDs) 31 for the buffers 19 assigned to that descriptor table. In the example, there are two messages, message one and message two, and hence five buffers A-E. Buffers A and B are initially assigned to message 1 and buffers C and D are assigned to message 2. Buffer E is assigned to the channel and is initially the common buffer. It will be noticed that the third or common buffer is unidentified in the message buffer descriptor tables 21 and 21′. Identification of this common buffer is maintained in local memory 33 of the slave processor as indicated in Figure 6.

The actions which must be taken by the slave processor in order to mark a received message for use by the host are as follows:
1) The slave processor 3 receives messages into the shared memory buffer assigned to the physical channel, which in the example is buffer E as shown in Figures 5a and 6a. Once a new message has been received, the slave processor must determine which buffer descriptor table 21, 21′ this message is associated with, using information contained in the message header. The slave processor must then find this buffer descriptor table. In the example, this is the descriptor table 21 associated with message 1.
2) The appropriate buffer descriptor table semaphore 25 is acquired.
3) The buffer status array 23 in this buffer descriptor table 21 is searched for a buffer 19 with a status of "newest". If a "newest" status is found, then the data which was received replaces this buffer, so the buffer status of "newest" is changed to "idle".
4) The buffer status array 23 is then searched for a buffer with a status of as "assigned to slave". If a buffer with the status of "assigned to slave" is not found, then an error has occurred.
5) The ID 31 of the buffer whose status is "assigned to slave" is set to the channel buffer ID (buffer E in the example). The status of the "assigned to slave" buffer is changed to "newest", as shown in Figure 5b.
6) The buffer status array is then searched for a buffer 19 with a status of "idle". The buffer 19 whose status is "idle" is acquired by the slave processor 3 in order to rearm the channel. If an "idle" buffer is not found, then an error has occurred. The slave processor acquires the shared memory buffer by changing its status from "idle" to "assigned to slave" as shown in Figure 5c The buffer identification of the common buffer which is assigned to the communications channel is assigned the buffer ID 31 of the buffer 19 which is now "assigned to slave", which is buffer A in the example as shown in Figure 6c.
7) The semaphore 25 is then released.

The next message received by the slave, which in the example is an update of message two, is received in the common buffer A as shown in Figure 5d. The slave processor 3 then goes through the steps just described above to acquire the semaphore 25′ for the message two buffer descriptor table 21′, to swap buffer A containing message two with an idle buffer, C. Buffer C becomes new common buffer. The slave processor also marks buffer A, as containing the "newest" update of message two, and identifies the swapped buffer position, Buffer 0, as "assigned to slave". The result is shown in Figures 5e and 6e. It will be noticed from these figures that buffer A which was originally assigned to the buffer descriptor table 21 for message 1 is now assigned to buffer descriptor table 21′ for message 2.

The method by which the host processor acquires inbound messages for its use is the same regardless of the type of slave processor with which it is communicating. Hence, the host processor, or even multiple host processors, acquire and release buffers in receiving messages from the slave processor using 2n + 1 triple buffering in shared memory in the same manner as discussed above in connection with pure triple buffering.

For outbound messages, that is where the host passes messages to the slave to be transmitted on the datalink, the host processor operates as in the case of pure triple buffering. The slave processor, however, must check each buffer descriptor table associated with the physical channel for a buffer with a message update to transmit. Each unique message associated with a channel is transmitted as a separate message. Datalink controllers cannot perform successive transmission on one channel on the same cycle due to interframe spacing requirements. Hence, only one message update is transmitted for each processing cycle of the slave processor. Thus, the slave processor must maintain an index of the last buffer descriptor table from which data was transmitted, such that messages are transmitted in order. Each processing cycle, the slave polls the buffer descriptor tables for each channel, starting with the buffer descriptor table following the one associated with the last message transmitted, until it finds a buffer descriptor table with data to be transmitted. The host processor can mark which message updates are to be transmitted by another entry in the buffer descriptor tables (not shown in the drawings). In such a case, the slave only transmits those data from those buffers which have been enabled for transmission by the host processor.

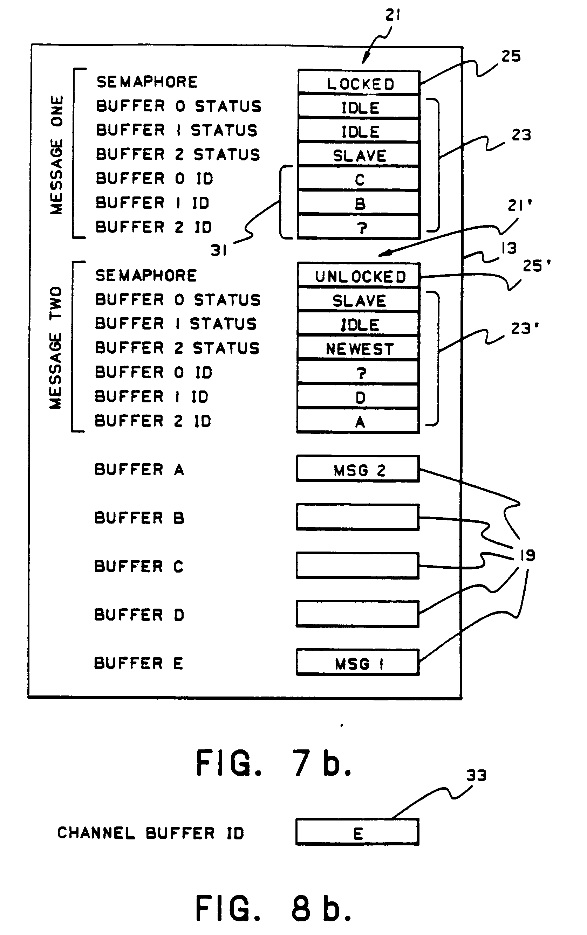

The action which must be taken by the slave processor in order to access new messages to be transmitted are as follows, and are illustrated in Figures 7 and 8:
1) The appropriate buffer descriptor semaphore is acquired. Figures 7a and 8a illustrate a situation in which the host processor 1 has placed updated images of messages 1 and 2 in shared memory for the slave processor to transit. In the example, the semaphore 25 for message 1 is acquired first.
2) The buffer status array 23 in this buffer descriptor table 21 is searched for a buffer 19 with a status of "newest". If a "newest" status is found, then the slave processor 3 must swap the current "assigned to slave" buffer with the "newest" buffer so that the slave can transmit the newest data. The buffer status of the "assigned to slave" buffer, Buffer 0, is changed to "idle", and its buffer ID 31, is updated to the ID, C of the current buffer 19 which is assigned to the communications channel itself. The buffer status of the "newest" buffer, Buffer 2, is changed to "assigned to slave". These actions are illustrated in Figures 7b and 8b.
3) The semaphore 25 is then released.
4) The transmission of the "assigned to slave" buffer data is initiated. Upon the completion of transmission, the buffer must be returned such that the host processor can reuse it.
5) The appropriate buffer descriptor semaphore is acquired. The appropriate buffer descriptor table 21 is the one corresponding to the data just transmitted.
6) The buffer status array 23 is searched for a buffer with a status of "newest". If a buffer status of "newest" is found or if the Mode byte in the buffer descriptor table is equal to "single shot", then the buffer which is presently "assigned to slave" remains in that state. Otherwise, the status of the buffer, Buffer 2 in the example, which is "assigned to slave" is changed back to "newest", and its ID 31 is updated to the ID of the current buffer which is assigned to the communications channel. This action is taken because the message image in the buffer assigned to the communications channel is still the "newest" data. The buffer status array 23 is then searched for a buffer 19 with a status of "idle". This buffer is acquired for use by the slave by changing its status to "assigned to slave", Buffer 0. The current buffer ID 31 of the buffer 19 assigned to the communications channel is changed to the ID of the buffer whose status is now "assigned to slave". In the example the host processor 1 had not provided another update of message 1 so that the buffer with the message transmitted has been returned to the buffer descriptor table 21 for message 1 and shared memory 13 returns to the configuration as shown as Figures 7a and 8a.
7) The semaphore 25 is then released.

Similar steps are followed by the slave processor 3 in acquiring the updated image of message 2 for transmission.

The triple buffering procedure followed by slave processors similar to datalink controllers is just an extended version of simple shared memory triple buffering. However, this method drastically reduces the memory requirements when many messages must be transmitted or received on a single physical channel. It reduces to simple triple buffering when only one message is transmitted or received per channel. For a datalink controller with multiple channels, 2n + 1 buffers are provided in share memory for each message of each channel, so that it can be seen that for large number of channels each with a large number of messages, a savings in shared memory space is considerable with this modified form of triple buffering.

### Dual Shared Memory/Single Local Memory Triple Buffering

Data highway controllers typically receive and transmit information from a linked list of buffers which are managed by a combination of hardware and software control. These buffers are normally located in the local memory of the controller processor, with the linked list managed under program control. The linked buffer list is required because the data highway controller hardware performs buffer prefetching when receiving data. Thus, for the data highway controller case a modified triple buffering scheme may be used. In slave-to-host message passing, only two shared memory buffers are required for each message because the third buffer in each set of triple buffers is actually a local memory buffer. Unfortunately, this leads to the need to move blocks of data from local memory into shared memory buffers, but otherwise, the fact that the third buffer is actually in local memory has no effect on the host or slave processing in terms of acquiring or releasing buffers. The only visible effects of the third buffer residing in local memory are:
1) The semaphore locked time is increased due to the necessity of performing a block move of data from the local memory buffer to one of the shared memory buffers while the buffer status array is in the locked state.
2) The buffer status of the third shared memory buffer in each buffer descriptor table, through which messages are passed from the slave-to-host, is assigned the value "unused".

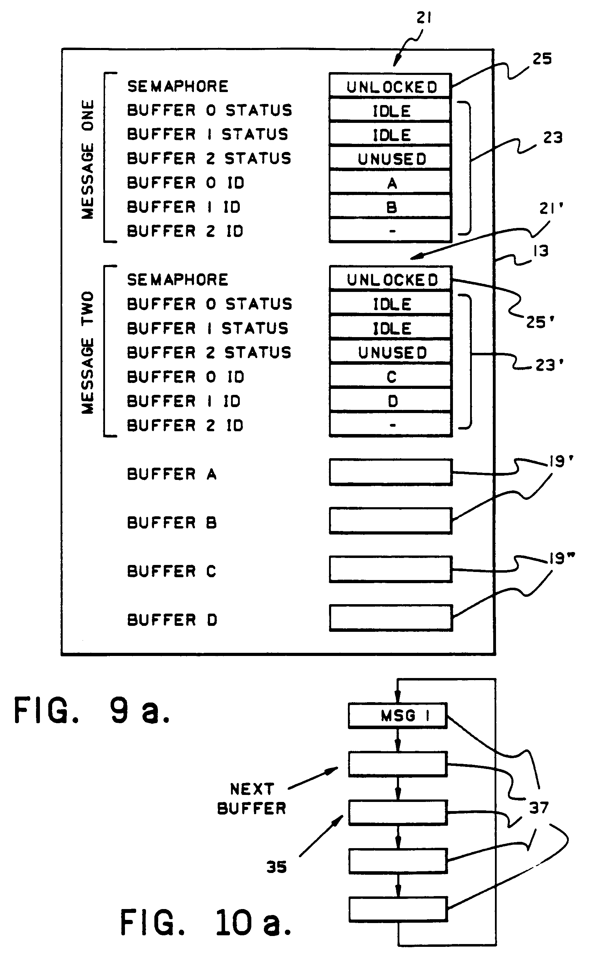

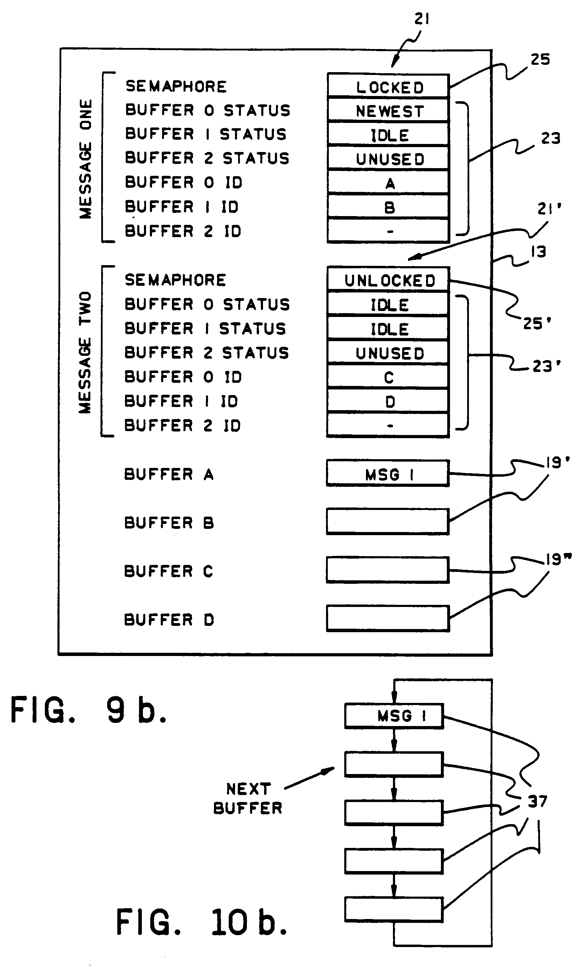

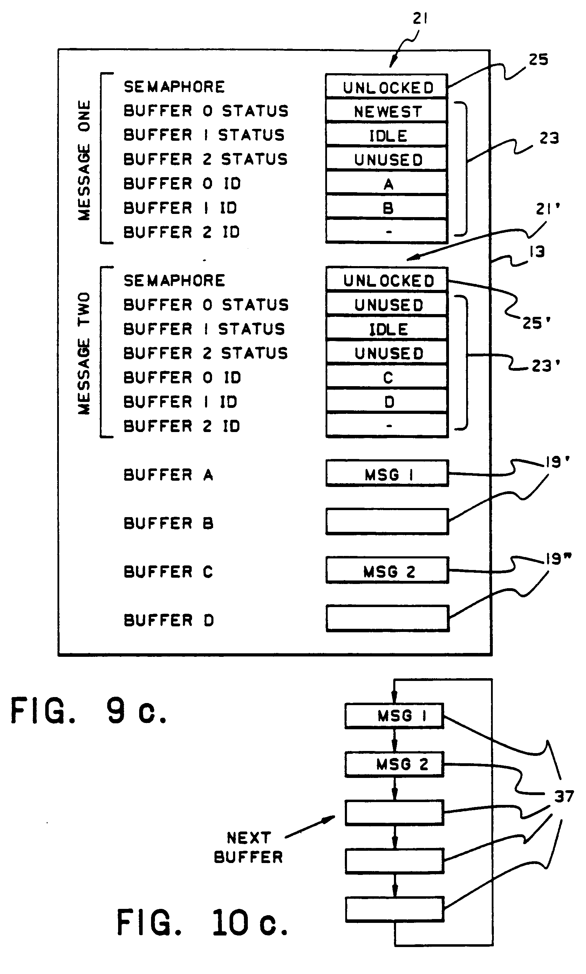

An example of 2n + local buffering is shown in Figures 9 and 10, where Figure 9 illustrates the shared memory 13 in which two buffers 19′ and 19˝ are permanently assigned to each message, and Figure 10 illustrates a circular buffer list 35 comprising several buffers 37 implemented in hardware in the local memory of the slave processor 3. In this scheme, two shared memory buffers 19′ or 19˝ are allocated by the slave processor 3 for each buffer descriptor table 21 and 21′. A buffer 37 becomes the third buffer for a message to be passed. The two shared memory buffers 19′ or 19˝ are the only resources which may be accessed by the host processor 1. The two shared memory buffers 19′ or 19˝ assigned to each buffer descriptor table 21 or 21′ are always the same buffers in this arrangement.

At initialization, buffer status arrays 21, 21′ for each of the buffer descriptors are initialized as follows: Two shared memory buffers 19′ and 19˝ are assigned a status of "idle" for each buffer descriptor table 21, 21′, while the buffer status which would normally be associated with the third shared memory buffer is assigned the status of "unused", indicating the buffer does not exist in shared memory, as shown in Figure 9a. One of the linked buffers 37 in local memory is designated as the "next buffer" to receive a message update as indicated in Figure 10a.

For the dual shared memory/single local memory triple buffering scheme, the action which must be taken by the slave processor 3 in order to mark received messages for use by the host processor 1 are as follows:
1) The slave processor receives messages into local data buffers 37. Once a new message has been received the slave processor 3 must determine which buffer descriptor table, 21 or 21′, the received message is associated with, using information contained in the message header. The slave processor 3 accesses the appropriate buffer descriptor table 21 or 21′ in order to acquire a shared memory buffer 19′ or 19˝ in which to copy the newly received message so that the newest data can be used by the host.
2) The semaphore 25 of the appropriate buffer descriptor table 21 is acquired by the slave processor. This is the table 21 for message 1 in the example.
3) The buffer status array 23 in this buffer descriptor table 21 is searched for a buffer 19′ with a status of "newest". If a buffer with a status of "newest" is found, then the data which was just received replaces this buffer so the buffer status of "newest" is changed to "idle".
4) The buffer status array 23 is searched for a buffer with a status of "idle". The status of this buffer is changed to "newest".
5) The buffer 19′ with a status of "newest" is filled with the data from the local buffer (as shown in Figure 9b).
6) The semaphore 25 of the buffer descriptor table 21 associated with the message 1 is released.

A subsequent message is received into local memory in the next buffer as illustrated in Figure 10c Assuming that this is an updated image of message 2, the slave processor 3 follows the same procedure as just discussed in order to enter the data in shared memory buffer C and to mark this buffer as having a status of "newest" as illustrated in Figure 9c.

Host processor access to the message updates placed in shared memory by the slave processor can occur at any time. The host processor will always access buffers with a status of "newest". The steps taken by the host processor to access these buffers are identical to those used in the pure triple buffering case. In other words, the fact that 2n + local buffering is used is transparent to the host processor.

Where the slave processor is a data highway controller, outbound message transmission, that is where the host passes message updates to the slave processor for transmission on the data highway, pure triple buffering is used. In other words, three buffers in shared memory are used for each message.

While specific embodiments of the invention have been described in detail, it will be appreciated by those skilled in the art that various modifications and alternatives to those details could be developed in light of the overall teachings of the disclosure.

## Claims

1. In interconnected asynchronous digital processors of the type which use a dual port shared memory, a method of transferring information messages in the form of updated images, between said asynchronous digital processors, characterized by the steps of:
providing at least three buffers in said dual port shared memory, and initially assigning one buffer to a first processor which is a sender-processor;
operating the sender-processor to enter an updated image of the message in the assigned buffer, to release the assigned buffer as the buffer with the newest updated message image to make the updated message image available to a second processor which is the receiver-processor, and to assign to itself an available buffer for the next updated message image;
operating the receiver-processor to assign the buffer with the newest updated message image to itself, to copy the newest updated message image and to then release such buffer to make it available for the sender-processor; and
permitting only one processor at a time to assign to itself and release buffers and while a buffer is being filled by the such processor or buffer contents are being read by the receiver-processor, the other processor is free to assign or release buffers.

2. The method of claim 1 including the step of operating the sender-processor, prior to releasing the buffer with the newest updated message image, to determine if there is another buffer which has been released as containing the newest updated message image, and if there is, making such buffer available for being assigned to said sender-processor.

3. The method of claim 2 wherein said step of operating the receiver-processor includes after copying the updated message image from the buffer assigned to it, determining if there is another buffer released by the sender-processor having a newer updated image of the message than the image in the buffer assigned to the receiver-processor, and if not, releasing said buffer assigned to the receiver-processsor as a buffer containing the newest update of the message image, which buffer can be reassigned to the receiver-processor if no other buffer with a newer updated message image has been released by the sender-processor when the receiver-processor again is operated to receive a message image.

4. The method of claim 3 for transmitting updated message images from a sender-processor to a plurality of receiver-processors, including the steps of:
maintaining a reader index for tracking the number of receiver-processors reading an updated message image, and wherein each receiver-processor is operated to assign a buffer to the receiver-processors only if no other buffer is already assigned to a receiver-processor, to increment the reader index before copying the updated message image from the buffer assigned to the receiver-processors, to decrement the reader index prior to releasing a buffer assigned to the receiver-processors and to release a buffer assigned to the receiver processors only if the reader index is zero.

5. The method of claim 1 for transmitting updated message images from a sender-processor to a plurality of receiver-processors wherein each of said receiver-processors is operated to only assign a buffer to the receiver-processors if no buffer is already assigned to the receiver-processors, and to otherwise read the updated message image in the buffer already assigned to the receiver-processors; and to not release the buffer assigned to the receiver-processors when any other receiver-processor is copying an updated message image from the buffer assigned to the receiver-processor, so as to avoid resource-contention.

6. The method of claim 1 adapted for transmitting updated images of n serially transmitted messages between the sender and receiver-processors, including:
providing 2n + 1 buffers in said dual port shared memory;
initially assigning a set of 2 buffers to each message and assigning the remaining buffer to each message as a common buffer assigned to the sender-processor;
operating the sender-processor: to receive an updated one of said messages in said common buffer assigned to it, to determine the set of buffers assigned to the received message, to release the buffer with the updated message image by swapping the common buffer with an available buffer assigned to that message which then becomes the common buffer assigned to the sender-processor;
and operating the receiver-processor to acquire the message updates by serially assigning to itself buffers with message updates associated with each message.

7. The method of claim 6 wherein said sender-processor is a communications-processor for controlling messages on a plurality of physical communication channels each of which carries n messages, wherein n is a variable having an independent value for each channel, said method including: providing 2n + 1 buffers in said dual port shared memory for each channel, and operating said sender processor and receiver processor to perform the steps of claim 6 for each channel.

8. The method of claim 1 for passing updated images of n messages between the sender-processor and the receiver-processor; including the steps of:
providing 2n + 1 buffers in said dual port shared memory;
initially assigning a set of two buffers to each message and assigning the remaining buffer to each message as a common buffer assigned to the receiver-processor; and
wherein operating the sender-processor further includes prior to assigning a buffer to itself, determining the set of buffers assigned to the message to be transmitted and then assigning to itself an available buffer in such set of buffers; and
wherein operating the receiver-processor includes: locating the buffers assigned to a message to be received, and wherein assigning to itself a buffer with an updated message image comprises swapping the common buffer assigned to the receiver-processor with the buffer with the updated message image.

9. The method of claim 8 further including:
operating said receiver-processor to, after extracting the message update from the buffer assigned to it, determine if one of the two buffers assigned to the associated message has a newer update than the update in the buffer assigned to it and if not, to swap the buffer assigned to it with an available buffer assigned to the associated message to retain as the latest update for the associated message the update in the buffer which had been the buffer assigned to the sender-processor.

10. The method of claim 9 wherein said receiver processor is a communications processor for controlling messages on a plurality of physical communication channels each of which carries n messages, wherein n is a variable having an independent value for each channel, said method including: providing 2n + 1 buffers in said dual port shared memory for each channel, and operating said sender-processor and receiver-processor to perform the steps of claim 9 for each channel.

11. The method of claim 1 wherein said step of permitting only one processor at a time to assign to itself and release buffers comprises maintaining a buffer status table in which said processors assign buffers to themselves and release buffers by setting pointers, and providing a lock for said buffer status table which can only be acquired by one processor at a time and which bars access by the other processor.

12. A group of interconnected asynchronous digital processors of the type which use a dual port shared memory (13), comprising at least one processor (3) acting as a sender-digital processor and at least one processor (1) acting as a receiver-digital processor for transferring information messages in the form of updated images, characterized by:
the sender-digital processor having a local memory including a first buffer (37);
said receiver digital processor operating asynchronously from the sender processor;
a dual port shared memory connected to the sender and receiver-processors and having two further buffers, said sender-processor being programmed to receive a newest updated message image in said first buffer (37), to assign an available one (A) of the shared memory buffers to itself to fill an assigned buffer with the newest updated message image data from said first buffer (37), and to release the buffer in shared memory assigned to it as the buffer with the newest updated message image when said buffer is filled and said receiver-processor being programmed to assign to itself the shared memory buffer with the newest updated message image, to read the newest updated message and to then release such buffer to make it available for the sender-processor; and
means permitting only one processor at a time to assign to itself and release shared memory buffers, respectively and to keep said shared memory buffer assigned to the sender-processor while it is filled with an updated message image, so as to avoid resource-contention.

13. The combination of claim 12 including a data highway connected to said sender-processor to successively transmit to said sender-processor updated images of a plurality of messages, wherein said local memory includes a plurality of linked buffers which successively receive updated message images from said data highway and wherein said dual port shared memory includes a set of two buffers assigned to each of said plurality of messages, said sender-processor being further programmed to successively assign to itself an available buffer from the set of buffers in shared memory assigned to each successive message to be passed to the receiver processor.

## Patentansprüche

1. In untereinander verbundenen asynchronen digitalen Prozessoren der Art, die einen Dualport-Gemeinschaftsspeicher benutzen, ein Verfahren zum Ubertragen von Informationsmitteilungen in Gestalt von aktualisierten Abbildungen zwischen den asynchronen digitalen Prozessoren, gekennzeichnet durch die folgenden Schritte:
es werden wenigstens drei Puffer in dem Dualport-Gemeinschaftsspeicher vorgesehen, und anfänglich wird ein Puffer einem ersten Prozessor zugewiesen, der ein Sendeprozessor ist;
der Sendeprozessor wird betrieben, um eine aktualisierte Abbildung der Mitteilung in den zugewiesenen Puffer einzugeben, um den zugewiesenen Puffer als den Puffer mit der neusten aktualisierten Mitteilungsabbildung freizugeben, um die aktualisierte Mitteilungsabbildung einem zweiten Prozessor verfügbar zu machen, der der Empfangsprozessor ist, und um sich selbst einen verfügbaren Puffer für die nächste aktualisierte Mitteilungsabbildung zuzuweisen;
der Empfangsprozessor wird betrieben, um dem Puffer die neuste aktualisierte Mitteilung zu sich selbst zuzuweisen, um die neuste aktualisierte Mitteilung zu kopieren, und dann einen solchen Puffer freizugeben, um ihn für den Sendeprozessor verfügbar zu machen; und
es wird nur einem Prozessor zu einem Zeitpunkt gestattet, sich selbst Puffer zuzuweisen und freizugeben, und während ein Puffer von dem Sendeprozessor gefüllt wird oder die Pufferinhalte von dem Empfangsprozessor abgelesen werden, ist der andere Prozessor frei, um Puffer zuzuweisen oder freizugeben.

2. Verfahren nach Anspruch 1, das den Schritt einschließt, den Sendeprozessor zu betreiben, bevor der Puffer mit der neusten aktualiserten Mitteilungsabbildung freigegeben wird, um zu bestimmen, ob ein anderer Puffer vorhanden ist, der als die neuste aktualisierte Mitteilungsabbildung enthaltend freigegeben wurde, und falls er vorhanden ist, einen solchen Puffer verfügbar zu machen, so daß er dem Sendeprozessor zugewiesen werden kann.

3. Verfahren nach Anspruch 2, in dem der Schritt des Betreibens des Empfangsprozessors einschließt, nach dem Kopieren der aktualisierten Mitteilungsabbildung von dem ihm zugewiesenen Puffer zu bestimmen, ob ein anderer Puffer mit einer neueren aktualisierten Abbildung der Mitteilung als die Abbildung in dem Puffer, der dem Empfangsprozessor zugewiesen ist, von dem Sendeprozessor freigegeben wird, und, wenn nicht, den Puffer, der dem Empfangsprozessor zugewiesen ist, als einen Puffer freizugeben, der die neuste Aktualisierung der Mitteilungsabbildung enthält, wobei der Puffer dem Empfangsprozessor wieder zugewiesen werden kann, wenn kein anderer Puffer mit einer neueren aktualisierten Mitteilungsabbildung von dem Sendeprozessor freigegeben wurde, wenn der Sendeprozessor wiederum betrieben wird, um eine Mitteilungsabbildung zu empfangen.

4. Verfahren nach Anspruch 3, um aktualisierte Mitteilungsabbildungen von einem Sendeprozessor zu einer Vielzahl von Empfangsprozessoren zu übertragen, das die folgenden Schritte einschließt:
ein Ableserindex wird beibehalten, um die Anzahl von Empfangsprozessoren aufzufinden, die eine aktualisierte Mitteilungsabbildung ablesen, und in dem jeder Empfangsprozessor betrieben wird, um den Empfangsprozessoren nur dann einen Puffer zuzuweisen, wenn nicht schon ein anderer Puffer einem Empfangsprozessor zugewiesen ist, um den Ableserindex zu erhöhen, bevor die aktualisierte Mitteilungsabbildung von dem Puffer kopiert wird, der den Empfangsprozessoren zugewiesen ist, um den Ableserindex vor der Freigabe eines Puffers zu verringern, der den Empfangsprozessoren zugewiesen ist, und um einen Puffer freizugeben, der den Empfangsprozessoren nur dann zugewiesen wird, wenn der Ableserindex Null ist.

5. Verfahren nach Anspruch 1, um aktualisierte Mitteilungsabbildungen von einem Sendeprozessor zu einer Vielzahl von Empfangsprozessoren zu senden, in dem jeder der Empfangsprozessoren betrieben wird, um den Empfangsprozessoren nur dann einen Puffer zuzuweisen, wenn den Empfangsprozxessoren noch kein Puffer zugewiesen ist, und um andererseits die aktualisierte Mitteilungsabbildung in dem Puffer, der den Empfangsprozessoren schon zugewiesen ist, abzulesen; und den Puffer, der den Empfangsprozessoren zugewiesen ist, nicht freizugeben, wenn irgendein anderer Empfangsprozessor eine aktualisierte Mitteilungsabbildung von dem Puffer kopiert, der dem Empfangsprozessor zugewiesen ist, um Quellenkonkurrenz zu vermeiden.

6. Verfahren nach Anspruch 1, das dazu angepaßt ist, aktualisierte Abbildungen von n seriell gesendeten Mitteilungen zwischen den Sende- und den Empfangsprozessoren zu senden, das folgendes einschließt:
2n + 1 Puffer werden in dem Dualport-Gemeinschaftsspeicher vorgesehen;
anfänglich wird jeder Mitteilung ein Satz von zwei Puffern zugewiesen und jeder Mitteilung wird der verbleibende Puffer als ein Gemeinschaftspuffer, der dem Sendeprozessor zugewiesen ist, zugewiesen;
der Sendeprozessor wird betrieben: um eine aktualisierte Mitteilung in dem ihm zugewiesenen Gemeinschaftspuffer zu empfangen, um den Puffersatz zu bestimmen, der der empfangenen Mitteilung zugewiesen ist, um den Puffer mit der aktualisierten Mitteilungsabbildung freizugeben, indem der Gemeinschaftspuffer mit einem verfügbaren Puffer getauscht wird, der der Mitteilung zugewiesen ist, die dann der Gemeinschaftspuffer wird, der dem Sendeprozessor zugewiesen ist;
und der Empfangsprozessor wird betrieben, um die Mitteilungsaktualisierungen zu erfassen, indem er sich selbst seriell Puffer mit Mitteilungsaktualisierungen zuweist, die jeder Mitteilung zugeordnet sind.

7. Verfahren nach Anspruch 6, in dem der Sendeprozessor ein Kommunikationsprozessor ist, um Mitteilungen auf einer Vielzahl von physikalischen Kommunikationskanälen zu steuern, von denen jeder n Mitteilungen trägt, worin n eine Veränderliche mit einem unabhängigen Wert für jeden Kanal ist, wobei das Verfahren folgendes einschließt: Vorsehung von 2n + 1 Puffern in dem Dualport-Gemeinschaftsspeicher für jeden Kanal, und Betrieb des Sendeprozessors und des Empfangsprozessors, um die Schritte von Anspruch 6 für jeden Kanal durchzuführen.

8. Verfahren nach Anspruch 1, um aktualisierte Abbildungen von n Mitteilungen zwischen dem Sendeprozesor und dem Empfangsprozessor weiterzugeben, das die folgenden Schritte einschließt:
Vorsehung von 2n + 1 Puffern in dem Dualport-Gemeinschaftsspeicher;
anfängliche Zuordnung eines Satzes von zwei Puffern zu jeder Mitteilung als ein Gemeinschaftspuffer, der dem Empfangsprozessor zugeordnet ist; und
in dem Betrieb des Sendeprozessors weiterhin einschließt, den Puffersatz zu bestimmen, der der Mitteilung, die gesendet werden soll, zugeordnet ist, bevor er sich selbst einen Puffer zuweist, und sich dann selbst einen verfügbaren Puffer in einem solchen Puffersatz zuzuweisen; und
in dem Betrieb des Empfangsprozessors folgendes einschließt: die Puffer, die einer Mitteilung zugeordnet sind, die empfangen werden soll, werden aufgefunden, und in dem die Selbstzuweisung eines Puffers mit einer aktualisierten Mitteilungsabbildung umfasst, den dem Empfangsprozessor zugeordneten Gemeinschaftspuffer mit dem Puffer mit der aktualisierten Mitteilungsabbildung zu tauschen.

9. Verfahren nach Anspruch 8, das weiterhin folgendes einschließt: der Empfangsprozessor wird betrieben, nachdem die Mitteilungsaktualisierung von dem ihm zugewiesenen Puffer entzogen werden, um zu bestimmen, ob einer der beiden Puffer, die der zugeordneten Mitteilung zugewiesen sind, eine neuere Aktualisierung als die Aktualisierung in dem ihm zugewiesenen Puffer hat, und, wenn dies nicht der Fall ist, den ihm zugewiesenen Puffer mit einem verfügbaren Puffer zu tauschen, der der zugeordneten Mitteilung zugewiesen ist, um als letzte Aktualisierung für die zugeordnete Mitteilung die Aktualisierung in dem Puffer zurückzuhalten, der der Puffer war, der dem Sendeprozessor zugewiesen war.

10. Verfahren nach Anspruch 9, in dem der Empfangsprozessor ein Kommunikationsprozessor ist, um Mitteilungen auf einer Vielzahl von physikalischen Kommunikationskanälen zu steuern, von denen jeder n Mitteilungen trägt, worin n eine Veränderliche mit einem unabhängigen Wert für jeden Kanal ist, wobei das Verfahren folgendes einschließt: für jeden Kanal werden 2n + 1 Puffer in den Dualport-Gemeinschaftsspeicher geliefert, und der Sendeprozessor und der Empfangsprozessor werden betrieben, um die Schritte von Anspruch 9 für jeden Kanal durchzuführen.

11. Verfahren nach Anspruch 1, in dem der Schritt des Gestattens, daß nur ein Prozessor zu einem Zeitpunkt sich selbst Puffer zuweisen und freigeben darf, umfasst, eine Pufferzustandstabelle beizubehalten, in der die Prozessoren sich selbst Puffer zuweisen und freigeben, indem Zeiger eingestellt werden, und Lieferung eines Verschlusses für die Pufferzustandstabelle, die nur von einem Prozessor zu einem Zeitpunkt erworben werden kann, und die Zugriff von den anderen Prozessoren verhindert.

12. Gruppe von miteinander verbundenen asynchronen digitalen Prozessoren der Art, die einen Dualport-Gemeinschaftsspeicher (13) benutzen, die wenigstens einen Prozessor (3) umfasst, der als digitaler Sendeprozessor wirkt, und wenigstens einen Prozessor (1) der als digitaler Empfangsprozessor wirkt, um Informationsmitteilungen in Gestalt von aktualisierten Abbildungen zu übertragen, dadurch gekennzeichnet, daß:
der digitale Sendeprozessor einen Lokalspeicher hat, der einen ersten Puffer (37) einschließt,
der digitale Empfangsprozessor asynchron bezüglich des Sendeprozessors arbeitet;
ein Dualport-Gemeinschaftsspeicher an die Sende- und Empfangsprozessoren angeschlossen ist und zwei weitere Puffer hat, wobei der Sendeprozessor programmiert ist, um eine neuste aktualisierte Mitteilungsabbildung in dem ersten Puffer (37) zu empfangen, um sich selbst einen verfügbaren (A) der Gemeinschaftsspeicherpuffer zuzuweisen, um einen zugewiesenen Puffer mit den neusten aktualisierten Mitteilungsabbildungsdaten von dem ersten Puffer (37) zu füllen, und um den Puffer in dem Gemeinschaftsspeicher, der ihm als der Puffer mit der neusten aktualisierten Mitteilungsabbildung zugewiesen ist, wenn der Puffer gefüllt ist, freizugeben, und der Empfangsprozessor programmiert ist, um sich selbst den Gemeinschaftsspeicherpuffer mit der neusten aktualisierten Mitteilungsabbildung zuzuweisen, um die neuste aktualisierte Mitteilung abzulesen, und dann einen solchen Puffer freizugeben, um ihn dem Sendeprozessor verfügbar zu machen; und
ein Mittel, das nur einem Prozessor zu einem Zeitpunkt gestattet, sich selbst jeweils Gemeinschaftsspeicherpuffer zuzuweisen und freizugeben, und um die Gemeinschaftspuffer dem Sendeprozessor zugewiesen zu halten, während er mit einer aktualisierten Mittweilung gefüllt wird, um Quellenkonkurrenz zu vermeiden.

13. Kombination von Anspruch 12, die einen Datenbus einschließt, der an den Sendeprozessor angeschlossen ist, um dem Sendeprozessor nacheinander a ktuialisierte Abbildungen einer Vielzahl zu senden, in dem der Lokalspeicher eine Vielzahl von verbunden Puffern einschließt, die nacheinander aktualisierte Mitteilungsabbildungen von dem Datenbus empfangen, und in dem der Dualport-Gemeinschaftsspeicher einen Satz von zwei Puffern einschließt, die jeder der Vielzahl von Mitteilungen zugewiesen sind, wobei der Sendeprozessor weiterhin programmiert ist, um sich selbst nacheinander einen verfügbaren Puffer von dem Puffersatz in dem Gemeinschaftsspeicher zuzuweisen, der jeder nachfolgenden Mitteilung zugewiesen ist, die dem Empfangsprozessor weitergegeben werden soll.

## Revendications

1. Dans des processeurs numériques asynchrones interconnectés, du type qui utilisent une mémoire partagée à deux entrées, procédé pour transférer entre lesdits processeurs numériques asynchrones des messages d'information sous la forme d'images réactualisées, caractérisé par les étapes consistant à :
- placer au moins trois tampons dans ladite mémoire partagée à deux entrées et assigner au départ un tampon à un premier processeur qui est un processeur émetteur,
- faire fonctionner le processeur émetteur pour qu'il entre une image réactualisée du message dans le tampon assigné, pour qu'il libère le tampon assigné en tant que le tampon contenant l'image réactualisée du message la plus récente afin de rendre l'image réactualisée du message disponible pour un second processeur qui est le processeur récepteur, et pour qu'il s'assigne à lui-même un tampon disponible destiné à la prochaine image réactualisée du message,
- faire fonctionner le processeur récepteur pour qu'il s'assigne à lui-même le tampon contenant l'image réactualisée du message la plus récente, pour qu'il copie l'image réactualisée du message la plus récente et pour qu'il libère ensuite ce tampon afin de le rendre disponible pour le processeur émetteur, et
- ne permettre qu'à un seul processeur à la fois de s'assigner à lui-même et de libérer des tampons et, quand un tampon est en cours de remplissage par le processeur émetteur ou bien quand le contenu du tampon est en cours de lecture par le processeur récepteur, laisser l'autre processeur libre d'assigner ou de libérer des tampons.

2. Procédé selon la revendication 1, comprenant l'étape consistant à faire fonctionner le processeur émetteur, avant de libérer le tampon contenant l'image réactualisée du message la plus récente, pour déterminer s'il y a un autre tampon qui a été libéré comme tampon contenant l'image réactualisée du message la plus récente et pour, s'il y en a un, rendre ce tampon disponible pour une assignation audit processeur émetteur.

3. Procédé selon la revendication 2, dans lequel ladite étape consistant à faire fonctionner le processeur récepteur comprend, après le copiage de l'image réactualisée du message depuis le tampon qui lui est assigné, le fait de déterminer s'il y a un autre tampon libéré par le processeur récepteur qui contient une image réactualisée du message plus récente que l'image se trouvant dans le tampon assigné au processeur récepteur et pour, si ce n'est pas le cas, libérer ledit tampon assigné au processeur récepteur en tant que le tampon contenant l'image réactualisée du message la plus récente, lequel tampon peut être assigné de nouveau au processeur récepteur si aucun autre tampon contenant une image réactualisée du message plus récente n'a été libéré par le processeur émetteur quand le processeur récepteur est de nouveau mis en fonctionnement pour recevoir une image de message.

4. Procédé selon la revendication 3, destiné à transmettre des images de message réactualisées d'un processeur émetteur à une pluralité de processeurs récepteurs, comprenant les étapes consistant à maintenir un repère de lecture pour suivre le nombre de processeurs récepteurs qui lisent une image de message réactualisée, et dans lequel chaque processeur récepteur est mis en fonctionnement pour assigner un tampon aux processeurs récepteurs uniquement si aucun autre tampon n'est déjà assigné à un processeur récepteur, pour incrémenter le repère de lecture avant de copier l'image de message réactualisée depuis le tampon assigné aux processeurs récepteurs, pour décrémenter le repère de lecture avant de libérer un tampon assigné aux processeurs récepteurs et pour libérer un tampon assigné aux processeurs récepteurs uniquement si le repère de lecture est à zéro.

5. Procédé selon la revendication 1, destiné à transmettre des images de message réactualisées d'un processeur émetteur à une pluralité de processeurs récepteurs, dans lequel chaque processeur récepteur est mis en fonctionnement pour assigner un tampon aux processeurs récepteurs uniquement si aucun tampon n'est déjà assigné aux processeurs récepteurs et pour, dans le cas contraire, lire l'image de message réactualisée dans le tampon déjà assigné aux processeurs récepteurs, et pour ne pas libérer le tampon assigné aux processeurs récepteurs quand n'importe quel autre processeur récepteur est en train de copier une image de message réactualisée depuis le tampon assigné au processeur récepteur, de manière à éviter un conflit de ressources.

6. Procédé selon la revendication 1, adapté à la transmission d'images réactualisées de n messages transmis en série entre les processeurs émetteur et récepteurs, qui comprend les étapes consistant à :
- placer 2n + 1 tampons dans ladite mémoire partagée à deux entrées,
- assigner au départ un groupe de 2 tampons à chaque message et assigner le tampon restant à chaque message en tant que tampon commun assigné au processeur émetteur,
- faire fonctionner le processeur émetteur pour qu'il reçoive l'un réactualisé desdits messages dans ledit tampon commun qui lui est assigné, pour qu'il détermine le groupe de tampons assigné au message reçu, pour qu'il libère le tampon contenant l'image de message réactualisée par un échange du tampon commun avec un tampon disponible assigné à ce message, lequel devient alors le tampon commun assigné au processeur émetteur, et
- faire fonctionner le processeur récepteur pour qu'il acquière les réactualisations du message en s'assignant à lui-même en série des tampons contenant des réactualisations du messages associées à chaque message.

7. Procédé selon la revendication 6, dans lequel ledit processeur émetteur est un processeur de communications destiné à régir des messages sur une pluralité de canaux physiques de communication dont chacun transporte n messages, sachant que n est une variable ayant une valeur indépendante pour chaque canal, ledit procédé comprenant le fait de placer 2n + 1 tampons dans ladite mémoire partagée à deux entrées pour chaque canal et de faire fonctionner ledit processeur émetteur et ledit processeur récepteur afin qu'ils procèdent aux étapes de la revendication 6 pour chaque canal.

8. Procédé selon la revendication 1, destiné à faire passer des images réactualisées de n messages entre le processeur émetteur et le processeur récepteur, comprenant les étapes consistant à :
- placer 2n + 1 tampons dans ladite mémoire partagée à deux entrées,
- assigner au départ un groupe de deux tampons à chaque message et assigner le tampon restant à chaque message en tant que tampon commun assigné au processeur récepteur,
dans lequel le fonctionnement du processeur émetteur comprend en outre, avant l'assignation d'un tampon à lui-même, une détermination du groupe de tampons assigné au message à transmettre et l'assignation ensuite à lui-même d'un tampon disponible dans ce groupe de tampons,
dans lequel le fonctionnement du processeur récepteur comprend une localisation des tampons assignés à un message à recevoir, et dans lequel l'assignation à lui-même d'un tampon contenant une image de message réactualisée comprend un échange du tampon commun assigné au processeur récepteur avec le tampon contenant l'image de message réactualisée.

9. Procédé selon la revendication 8, comprenant en outre un fonctionnement dudit processeur récepteur pour, après extraction du message réactualisé du tampon qui lui est assigné, déterminer si l'un des deux tampons assignés au message associé présente une réactualisation plus récente que la réactualisation se trouvant dans le tampon qui lui est assigné et pour, si ce n'est pas le cas, échanger le tampon qui lui est assigné avec un tampon disponible assigné au message associé afin de retenir en tant que dernière réactualisation du message associé la réactualisation se trouvant dans le tampon qui a été le tampon assigné au processeur émetteur.

10. Procédé selon la revendication 9, dans lequel ledit processeur récepteur est un processeur de communications destiné à régir des messages sur une pluralité de canaux physiques de communication dont chacun transporte n messages, sachant que n est une variable ayant une valeur indépendante pour chaque canal, ledit procédé comprenant le fait de placer 2n + 1 tampons dans ladite mémoire partagée à deux entrées pour chaque canal et de faire fonctionner ledit processeur émetteur et ledit processeur récepteur afin qu'ils procèdent aux étapes de la revendication 9 pour chaque canal.

11. Procédé selon la revendication 1, dans lequel ladite étape consistant à ne permettre qu'à un seul processeur à la fois de s'assigner à lui-même et de libérer des tampons comprend le fait de conserver une table de l'état des tampons dans laquelle lesdits processeurs s'assignent des tampons à eux-mêmes et libèrent des tampons en établissant des indicateurs, et le fait de prévoir un verrou pour ladite table de l'état des tampons qui ne peut être ouvert que par un processeur à la fois et qui interdit l'accès à l'autre processeur.

12. Groupe de processeurs numériques asynchrones interconnectés, du type qui utilisent une mémoire partagée (13) à deux entrées, comprenant au moins un processeur (3) agissant comme un processeur numérique émetteur et au moins un processeur (1) agissant comme un processeur numérique récepteur, destiné à transférer des messages d'information sous la forme d'images réactualisées, caractérisé par :
- le fait que le processeur numérique émetteur comporte une mémoire locale incluant un premier tampon (37),
- le fait que le processeur numérique récepteur fonctionne de manière asynchrone par rapport au processeur émetteur,
- une mémoire partagée à deux entrées couplée aux processeurs numériques émetteur et récepteur et comportant deux autres tampons, ledit processeur émetteur étant programmé pour recevoir une image de message réactualisée plus récente dans ledit premier tampon (37), pour s'assigner à lui-même celui disponible (A) des tampons de la mémoire partagée afin de remplir un tampon assigné avec la donnée d'image de message réactualisée la plus récente provenant dudit premier tampon (37), et pour libérer le tampon de la mémoire partagée qui lui est assigné en tant que le tampon contenant l'image de message réactualisée la plus récente quand ledit tampon est plein, et ledit processeur récepteur étant programmé pour s'assigner à lui-même le tampon de la mémoire partagée contenant l'image de message réactualisée la plus récente, pour lire le message réactualisé le plus récent et pour libérer ensuite ce tampon afin de le rendre disponible pour le processeur émetteur, et
- un moyen qui ne permet qu'à un seul processeur à la fois de respectivement s'assigner à lui-même et libérer des tampons de la mémoire partagée et de maintenir ledit tampon de la mémoire partagée assigné au processeur émetteur pendant qu'il est rempli d'une image de message réactualisée de manière à éviter un conflit de ressources.

13. Groupe selon la revendication 12, incluant une autoroute de données connectée audit processeur émetteur pour transmettre successivement audit processeur émetteur des images réactualisées d'une pluralité de messages, sachant que ladite mémoire locale contient une pluralité de tampons reliés qui reçoivent successivement des images de message réactualisées en provenance de ladite autoroute de données, et sachant que ladite mémoire partagée à deux entrées contient un groupe de deux tampons assigné à chaque message de ladite pluralité, ledit processeur émetteur étant en outre programmé pour successivement s'assigner à lui-même un tampon disponible dans le groupe de tampons de la mémoire partagée assigné à chaque message successif qui doit être envoyé au processeur récepteur.
